# DEMANDE DE BREVET EUROPEEN

(11) **EP 4 764 836 A1**
(43) Date de publication de la demande: **24.06.2026**
(21) Numéro de dépôt: 25223269.9
(22) Date de dépôt: 15.12.2025
(51) Int. Cl.: G06F 8/654, G06F 8/61, G06F 9/4401

(54) **PROCEDE DE MISE A JOUR D'UN PROGRAMME DANS UN MICROCONTROLEUR**

(30) Priorité: 20.12.2024 FR 2415029
(71) Demandeur: STMicroelectronics International N.V., 1228 Plan-les-Ouates, Geneva (CH)
(72) Inventeur: BUHRIG, Aurelien, 38410 SAINT-MARTIN-D'URIAGE (FR)
(74) Mandataire: Cabinet Beaumont

(57) **Abrégé**

La présente description concerne un procédé de mise à jour d'un ou plusieurs programmes (222, 309) d'un microcontrôleur (100), le procédé comprenant la mise à jour individuelle de différentes images desdits un ou plusieurs programmes (222, 309), la mise à jour de chacune de ces images comprenant :
- la sélection d'un programme à exécuter, parmi plusieurs programmes, lors d'un démarrage du microcontrôleur ;
- la sélection d'un ou plusieurs emplacements mémoires desdits un ou plusieurs programmes (222, 309), dans lequel charger une image servant à la mise à jour ; et
- la mise à jour de données de versions, et de dépendance d'images, desdits un ou plusieurs programmes (222, 309), contenues dans un programme de mises à jour (ROT).

## Description

### Domaine technique

La présente description concerne de façon générale les procédés de mise à jour d'un programme dans un microcontrôleur et les microcontrôleurs mettant en œuvre de tels procédés.

### Technique antérieure

Certains microcontrôleurs peuvent mettre en œuvre une mise à jour d'un ou plusieurs de leurs programmes. Les procédés actuels de mise à jour de programmes dans les microcontrôleurs nécessitent néanmoins une utilisation importante d'espace mémoire.

### Résumé de l'invention

Il existe un besoin de fournir un procédé de mise à jour d'un programme d'un microcontrôleur limitant l'espace mémoire nécessaire.

Un mode de réalisation pallie tout ou partie des inconvénients des procédés de mise à jour connus.

Un mode de réalisation prévoit un procédé de mise à jour d'un ou plusieurs programmes d'un microcontrôleur, le procédé comprenant la mise à jour individuelle de différentes images desdits un ou plusieurs programmes, la mise à jour de chacune de ces images comprenant :
- la sélection d'un programme à exécuter, parmi plusieurs programmes, lors d'un démarrage du microcontrôleur ;
- la sélection d'un ou plusieurs emplacements mémoires desdits un ou plusieurs programmes, dans lequel charger une image servant à la mise à jour ; et
- la mise à jour de données de versions, et de dépendance d'images, desdits un ou plusieurs programmes, contenues dans un programme de mises à jour.

Un mode de réalisation prévoit un microcontrôleur, comprenant un ou plusieurs programmes, et un programme de mises à jour, le microcontrôleur étant configuré pour mettre en œuvre la mise à jour individuelle de différentes images desdits un ou plusieurs programmes, la mise à jour de chacune de ces images comprenant :
- la sélection d'un programme à exécuter, parmi plusieurs programmes, lors d'un démarrage du microcontrôleur ;
- la sélection d'un ou plusieurs emplacements mémoires desdits un ou plusieurs programmes, dans lequel charger une image servant à la mise à jour ; et
- la mise à jour de données de versions, et de dépendance d'images, desdits un ou plusieurs programmes, contenues dans un programme de mises à jour.

Selon un mode de réalisation, la sélection du programme à exécuter lors d'un démarrage du microcontrôleur est réalisée parmi un desdits un ou plusieurs programmes, l'un desdits un ou plusieurs programmes étant un programme de chargement de mises à jour et un autre desdits un ou plusieurs programmes étant un programme applicatif.

Selon un mode de réalisation, la mise à jour de chacune des images comprend en outre la sélection d'une méthode d'installation des mises à jour à utiliser par le programme de mises à jour.

Selon un mode de réalisation, lesdits un ou plusieurs emplacements mémoires sélectionnés comprend un emplacement mémoire d'une ou plusieurs images desdits un ou plusieurs programmes.

Selon un mode de réalisation, la mise à jour de chacune des images comprend en outre la mise à jour de données de configuration du programme de mises à jour comprenant des données associées :
- au programme à exécuter ;
- auxdits un ou plusieurs emplacements mémoires dans lesquels charger, avant leur installation, une ou des mises à jour d'image ;
- aux données de versions et de dépendance d'images ; et
- à la méthode d'installation de mises à jour sélectionnée.

Selon un mode de réalisation, la sélection du programme à exécuter lors d'un redémarrage du microcontrôleur comprend la sélection d'un point d'entrée respectif d'un parmi lesdits un ou plusieurs programmes.

Selon un mode de réalisation, le programme applicatif et le programme de chargement de mises à jour ont des images en commun.

Selon un mode de réalisation, le programme applicatif, le programme de chargement de mises à jour et le programme de mises à jour sont stockés dans une mémoire non volatile du microcontrôleur.

Selon un mode de réalisation, un premier emplacement mémoire de ladite mémoire est configuré pour être accessible uniquement par le programme de mises à jour, et pour contenir lesdites données de configuration du programme d'installation.

Selon un mode de réalisation, un deuxième emplacement mémoire de ladite mémoire est configuré pour être accessible en lecture et en écriture par le programme applicatif et par le programme de chargement de mises à jour.

Selon un mode de réalisation, les mises à jour des données de configuration du programme de mises à jour sont chargées, dans ledit deuxième emplacement mémoire, puis sont installées dans le premier emplacement mémoire par le programme de mises à jour.

Selon un mode de réalisation, un programme parmi le programme de chargement de mises à jour ou le programme applicatif est configuré pour :
- télécharger des données de configuration du programme de mises à jour ;
- effacer des images desdits un ou plusieurs programmes ;
- télécharger des mises à jour dans lesdits un ou plusieurs emplacements mémoires définis dans les données de configuration du programme de mises à jour.

Selon un mode de réalisation, la mise à jour de chacune de ces images comprend :
- une première mise à jour d'une configuration d'un programme de mise à jour (ROT), la première mise à jour comprenant :
   mettre à jour des données de version et de dépendance d'image dudit un ou plusieurs programmes (222, 309) ;
   sélectionner, parmi un desdits un ou plusieurs programmes (222, 309), un programme de chargement de mise à jour (309) à être exécuté au prochain démarrage du microcontrôleur ; et
   sélectionner un ou plusieurs emplacements mémoires dudit un ou plusieurs programmes (222, 309) qui ne soient pas utilisés pour ledit programme de chargement de mise à jour (309) ; puis
- après un redémarrage du microcontrôleur :
   la vérification dudit programme de chargement de mise à jour (309) par le programme de mise à jour (ROT) en utilisant les données de dépendance et de version d'image de la première mise à jour de la configuration du programme de mise à jour (ROT) ;
   dudit programme de chargement de mise à jour (309) comprenant le chargement de données associées à la mise à jour de l'image individuelle dans lesdits un ou plusieurs premiers emplacements mémoires ; et
   le chargement d'une seconde mise à jour de la configuration du programme de mise à jour (ROT) comprenant la sélection du programme de chargement de mise à jour (309) à exécuter au prochain démarrage, et une sélection d'un ou plusieurs deuxièmes emplacements mémoires du programme de chargement de mise à jour (309) correspondant à l'image individuelle à mettre à jour ; puis
- après un redémarrage du microcontrôleur :
   la vérification dudit programme de chargement de mise à jour (309) par le programme de mise à jour (ROT) en utilisant les données de dépendance et de version d'image de la deuxième mise à jour de la configuration du programme de mise à jour (ROT) ; et
   l'exécution dudit programme de chargement de mise à jour (309), comprenant le chargement, desdites données associées à la mise à jour de l'image individuelle, dans lesdites deuxièmes emplacements mémoires sélectionnés, les données chargées dans lesdits deuxièmes emplacements mémoires correspondant à l'image individuelle mise à jour.

Un mode de réalisation prévoit un système radiofréquence comprenant une unité de mise à jour, externe au microcontrôleur, et le microcontrôleur tel que décrit ci-dessus,
le programme de chargement de mises à jour du microcontrôleur étant configuré pour télécharger des mises à jour d'images depuis l'unité de mise à jour.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre de façon très schématique et sous forme de blocs, un système du type auquel s'appliquent les modes de réalisation ;
la figure 2 illustre de façon très schématique et sous forme de blocs, un exemple d'une configuration mémoire du microcontrôleur de la figure 1 ;
la figure 3 illustre de façon très schématique et sous forme de blocs, un exemple d'une configuration mémoire du microcontrôleur de la figure 1 ;
la figure 4 illustre de façon très schématique et sous forme de blocs, un exemple d'une configuration mémoire du microcontrôleur de la figure 1 selon un mode de réalisation ;
la figure 5 illustre un procédé de mise à jour de programme selon un mode de réalisation ; et
la figure 6 illustre un procédé de mise à jour de programme selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

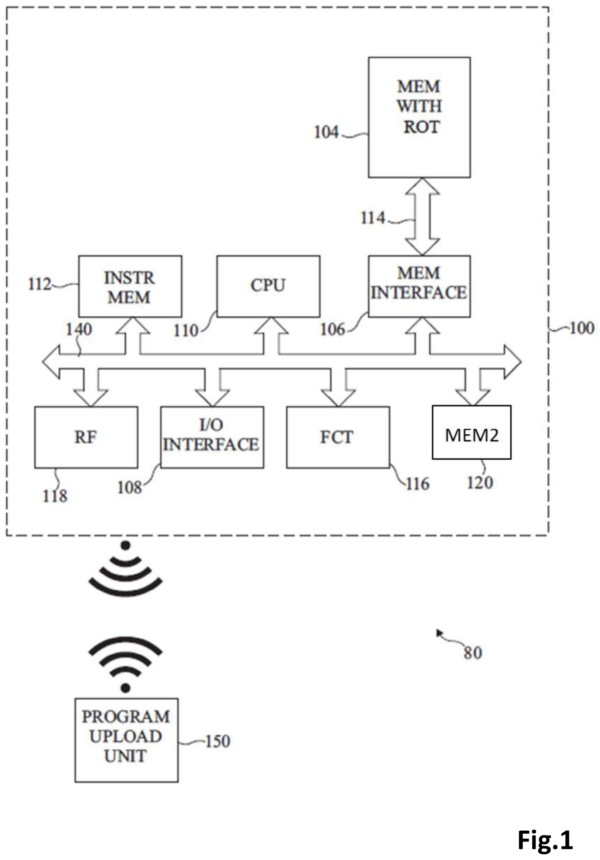

La figure 1 illustre de façon très schématique et sous forme de blocs, un système 80 du type auquel s'appliquent les modes de réalisation.

Le système 80 comprend par exemple un microcontrôleur 100 capable de communiquer sans fil, ou de façon filaire, avec une unité de mise à jour 150 (PROGRAM UPLOAD UNIT).

Le microcontrôleur 100 comprend une mémoire non-volatile 104 (MEM WITH ROT), par exemple de type mémoire FLASH ou de type à changement de phase, capable de communiquer, via un bus de communication 114, avec une interface de mémoire non-volatile 106 (MEM INTERFACE) configurée pour écrire ou lire des données dans et depuis la mémoire non-volatile 104. Dans un exemple, des programmes et/ou applications systèmes, tels que des programmes de démarrage (Boot en anglais), sont mis en œuvre dans la mémoire 104. La mémoire 104 comprend par exemple un programme configuré pour gérer d'autres programmes stockés au sein de la mémoire 104. Ces autres programmes sont par exemple des applications mises au point par des utilisateurs du microcontrôleur, ou encore des protocoles de communication sans fil (Wireless Protocol Stack en anglais) qui permettent, lorsqu'ils sont exécutés, de mettre en œuvre une communication de données avec l'unité de mise à jour 150. La mémoire 104 peut en outre comprendre un programme permettant d'implémenter une mise à jour des données, des programmes ou des applications présents par exemple dans la mémoire 104.

Le microcontrôleur 100 comprend en outre, par exemple, une unité de traitement 110 (CPU) comprenant un ou plusieurs processeurs sous contrôle d'instructions stockées par exemple dans une mémoire système 112 (INSTR MEM) ou dans la mémoire 104. La mémoire d'instruction 112 est par exemple une mémoire volatile de type à accès aléatoire (en anglais Random Access Memory, RAM). L'unité de traitement 110 et la mémoire 112 communiquent, par exemple, via un bus système 140 (de données, d'adresses et d'instructions). La mémoire 104 est reliée au bus système 140 par l'intermédiaire de l'interface de mémoire non-volatile 106 et par l'intermédiaire du bus 114.

Le microcontrôleur 100 comprend en outre une interface d'entrée/sortie 108 (I/O INTERFACE) reliée au bus système 140 pour communiquer avec l'extérieur.

Le microcontrôleur 100 comprend en outre, par exemple, une autre mémoire 120 (MEM2) de type non volatile ou de type RAM. Cette mémoire 120 est reliée au bus système 140 directement ou par l'intermédiaire d'une interface de mémoire (non-illustrée) dont le rôle est par exemple similaire à l'interface 106.

Le microcontrôleur 100 peut intégrer d'autres circuits mettant en œuvre d'autres fonctions (par exemple, une ou plusieurs mémoires volatiles et/ou non-volatiles, d'autres unités de traitement), symbolisées par un bloc 116 (FCT) en figure 1.

Le microcontrôleur 100 peut en outre intégrer d'autres circuits, comme des circuits de communication sans fil 118 (RF) ayant par exemple des circuits d'adaptation d'impédance et qui sont configurés pour être reliés à une ou des antennes.

Il peut être nécessaire de mettre à jour le ou les programmes présents dans la mémoire 104.

De plus, certaines régulations locales, telles que la RED (Radio Equipement Directive en anglais) en Europe, ou certains schémas de certification comme PSA^{©} ou SESIP, exigent d'avoir des capacités de mise à jour sécurisées.

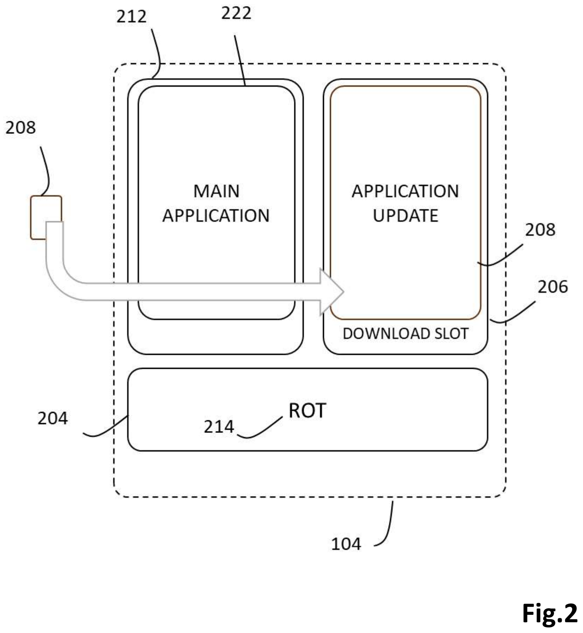

La figure 2 illustre de façon très schématique et sous forme de blocs, un exemple d'une mémoire d'un microcontrôleur. Plus particulièrement, l'exemple représenté illustre un exemple de la mémoire 104 du microcontrôleur 100.

L'exemple de la figure 2 permet de mettre en œuvre par exemple une mise à jour sans fil (Over the air, OTA, en anglais). L'exemple représenté permet par exemple de mettre en œuvre une mise à jour d'un programme, dit principal, 222 (MAIN APPLICATION) stocké dans un espace mémoire 212 de la mémoire 104. Dans un exemple, le programme 222 est formé d'une ou plusieurs images, qui sont par exemple des fichiers, par exemple binaires, formés par des suites d'instructions et/ou de données.

La mémoire 104 peut être divisée en plusieurs emplacements mémoire qui peuvent être appelés primaires ou secondaires. Les emplacements primaires tels que l'emplacement 212 sont les emplacements contenant des images avec du code ou des données directement accessibles par le programme principal 222. Les emplacements secondaires, tels qu'un emplacement 206 (DOWNLOAD SLOT), sont des emplacements permettant le stockage de mises à jour, autrement dit d'autres versions, téléchargées du programme 222, pouvant être par exemple installées dans l'emplacement primaire 212.

La mémoire 104 comprend par exemple un autre espace mémoire 204, au sein duquel est stocké un programme de mises à jour 214 (ROT) (Root of trust en anglais). Le programme ROT comprend par exemple un programme de démarrage sécurisé (Secure boot en anglais) vérifiant l'authenticité du programme 222 avant son exécution. Lorsque le programme 222 est composé de plusieurs images, la cohérence du programme 222 est également vérifiée à l'aide d'informations de dépendance. Le programme ROT, permettant le démarrage sécurisé et l'installation de mises à jour, peut par exemple être développé à l'aide de la librairie MCUBoot^{©}.

Le programme ROT est exécuté au démarrage du microcontrôleur 100 et est également configuré pour détecter les éventuelles mises à jour dans les emplacements mémoire secondaires, et le cas échéant installer les mises à jour. L'installation d'une image depuis un emplacement mémoire, dit « secondaire », 206 vers un emplacement mémoire, dit « primaire », 212 consiste à authentifier une image de mise à jour 208 (APPLICATION UPDATE), vérifier que la version téléchargée n'est pas une ancienne version (« anti-rollback » en anglais), et optionnellement décrypter l'image de mise à jour. L'image décryptée est alors recopiée à la place de l'image 222 pour pouvoir être utilisée. Cette image de mise à jour 208 du programme 222 est téléchargée, par exemple depuis l'unité de mise à jour 150, et chargée dans l'espace mémoire 206.

L'exemple de la figure 2 implique que l'espace mémoire total nécessaire pour la mise à jour du programme 222 soit environ le double de l'espace mémoire occupé par le programme 222 ce qui implique des coûts importants ou une limitation de la mémoire disponible pour le programme 222 et donc une limitation de ses fonctionnalités.

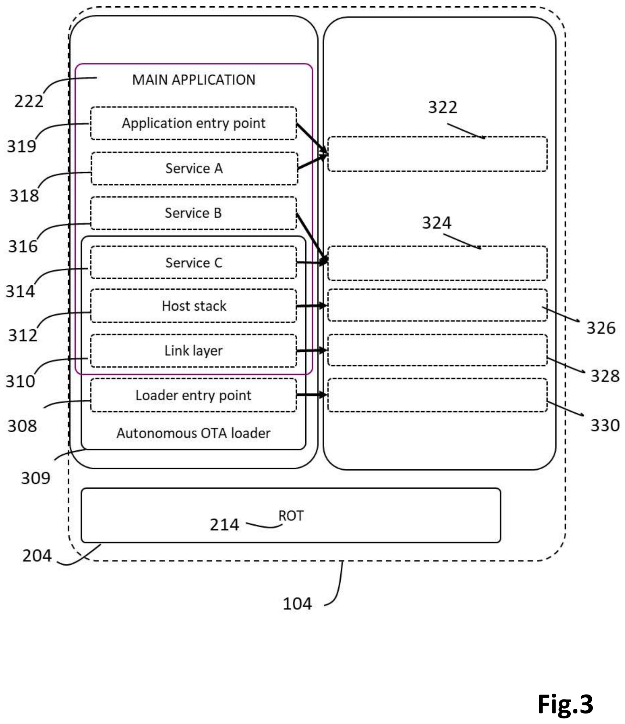

La figure 3 illustre de façon très schématique et sous forme de blocs, un exemple d'une mémoire d'un microcontrôleur. Plus particulièrement, l'exemple représenté illustre un exemple de la mémoire 104 du microcontrôleur 100.

L'exemple de la figure 3 est similaire à celui de la figure 2 sauf que le programme 222 à mettre à jour est formé de plusieurs images, autrement appelés services, 318 (Service A), 316 (Service B), 314 (Service C), 312 (Host stack), 310 (Link layer), stockés dans des emplacements mémoires respectifs. Le programme 222 comprend également un point d'entrée 319 (Application entry point) qui représente par exemple l'instruction, ou la série d'instructions, mises en œuvre en premier lors de l'exécution du programme 222. Dans un exemple, l'image 319 correspond au cœur de l'application, l'image 316 correspond à des fonctions par exemple liées à l'identification vis-à-vis d'un portail distant (cloud en anglais), l'image 314 correspond à une librairie de cryptographie, et les images 312 et 310 correspondent par exemple à la mise en œuvre d'un protocole de communication sans fil.

Dans l'exemple illustré en figure 3, la mémoire 104 comprend en outre un autre programme 309 (Autonomous OTA loader) qui est un programme de chargement de mises à jour. Le programme 309 comprend par exemple les images 310, 312 et 314 ainsi qu'un point d'entrée 308 (Loader entry point). Le point d'entrée 308 représente par exemple l'instruction ou une série d'instructions, mises en œuvre en premier lors de l'exécution du programme ou application 308. Le programme 309 a pour fonction par exemple d'aller chercher, sur un emplacement distant, une mise à jour et de la télécharger. Dans l'exemple de la figure 3, les références de versions des différentes images du programme 309, ainsi que leurs dépendances, sont stockées dans chaque image. Les images peuvent également comprendre une signature associée à un chiffrement.

Le programme 309 illustré en figure 3 s'exécute par exemple sans dépendance aux images 316, 318 et 319 qui sont spécifiques au programme 222.

Dans l'exemple illustré en figure 3, les images 314, 312, et 310 sont communes aux programmes 222 et 309. Cela permet de limiter l'espace mémoire utilisé.

Dans un exemple non illustré, d'autres programmes par exemple liés à la fabrication, à la calibration ou au diagnostic peuvent être incorporés dans la mémoire 104.

En utilisant les mécanismes de mise à jour actuels, tels que ceux présents dans la librairie MCUboot^{®}, les emplacements mémoire secondaires doivent être définis statiquement à la compilation du programme de mises à jour ROT 214. Ainsi, dans l'exemple de la figure 3, des emplacements mémoires supplémentaires 322, 324, 326, 328, et 330 doivent être réservés pour traiter le pire cas dans lequel il est nécessaire de télécharger les mises à jour de toutes les images 308, 310, 312 et 314 de l'application 309 (OTA loader) avant de les installer et de redémarrer l'application 309. Cela est couteux en termes d'espace mémoire consommé. De plus, la librairie MCUBoot^{©} ne supporte qu'un seul point d'entrée fixe, 308 ou 319, à définir pour le démarrage du programme de mises à jour ROT 214. Un autre inconvénient de cette librairie est qu'il n'est pas possible de reconfigurer des modes d'écritures différents en fonction des images à mettre à jour. Par exemple, il n'est pas possible que certaines images soient installées, lors de la mise à jour par le programme de mises à jour 214 ROT, avec une méthode d'installation sur place (install-in-place en anglais), et que d'autres images soient installées avec une autre méthode, comme celle basée sur l'échange/sauvegarde (swap/backup en anglais) ou encore celle basée sur l'écriture par-dessus des données (overwrite en anglais).

Une autre limitation des protocoles actuels provient du fait que l'information de dépendance de chaque image est stockée au sein de cette même image. En d'autres termes, si une première image donnée dépend d'une autre image qui a été mise à jour, alors l'information de dépendance de la première image doit être mise à jour également et donc la première image doit être également mise à jour. Cela limite l'efficacité de la stratégie de mise à jour.

Afin de pallier aux inconvénients des exemples des figures 2 et 3, les modes de réalisation prévoient un procédé de mise à jour d'un ou plusieurs programmes d'un microcontrôleur (comme par exemple le programme applicatif 222 ou le programme 309), le procédé comprenant la mise à jour individuelle de différentes images desdits un ou plusieurs programmes,
la mise à jour de chacune de ces images comprenant :
- la sélection d'un programme à exécuter, parmi plusieurs programmes, lors d'un démarrage du microcontrôleur ;
- la sélection d'un ou plusieurs emplacements mémoires desdits un ou plusieurs programmes, dans lequel charger une image servant à la mise à jour ; et
- la mise à jour de données de versions, et de dépendance d'images, desdits un ou plusieurs programmes, contenues dans le programme de mises à jour.

Selon un aspect, chaque mise à jour d'image comprend en outre la sélection d'une méthode d'installation des mises à jour à utiliser par le programme de mise à jour ROT.

Autrement dit, le procédé proposé met en œuvre la mise à jour, de manière séparée ou indépendante, d'une ou plusieurs d'images composant un ou plusieurs programmes parmi par exemple les programmes 222, 309. Les images à mettre à jour sont par exemple indépendantes entre elles.

Les étapes de sélection, et l'étape de mise à jour de données de versions et de dépendances, étant mises en œuvre pour chaque image mise à jour, cela permet de les configurer de manière différente pour chaque image. Une configuration dynamique de mise à jour est ainsi mise en œuvre ce qui permet d'établir une stratégie de mise à jour flexible.

Cela permet une configuration dynamique du programme de mises à jour ROT pour mettre en œuvre les étapes de sélection, et l'étape de mise à jour de données de versions et de dépendances, de façon différenciée pour chaque image à mettre à jour.

Cela permet en outre de se passer d'emplacements mémoires supplémentaires dédiés aux images mises à jour en réutilisant des emplacements primaires d'images mises à jour.

Dans les exemples qui suivent, les emplacements mémoires sélectionnés, autrement dits configurés, pour qu'une image servant à la mise à jour y soit chargée, sont appelés emplacements secondaires. Les emplacements mémoires dans lesquels sont stockées initialement les images, avant leur mise à jour, sont appelés emplacements primaires.

Les procédés décrits dans les modes de réalisation permettent également la mise à jour indépendante d'une ou plusieurs images d'un programme comprenant ces images, au sein de ce même programme sans emplacement mémoire supplémentaire.

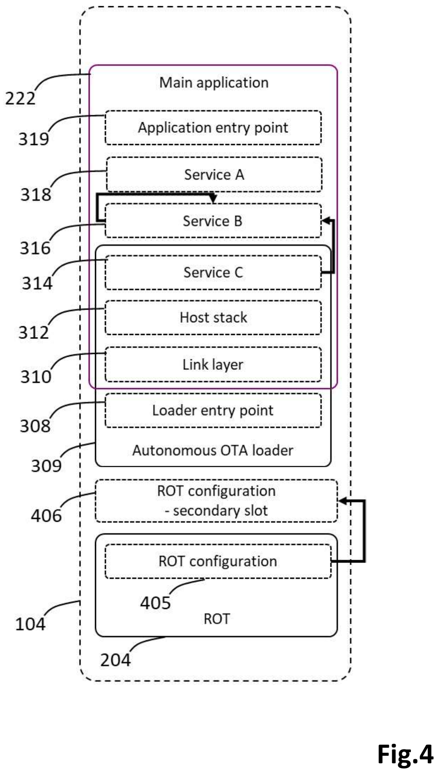

La figure 4 illustre de façon très schématique et sous forme de blocs, un exemple de la mémoire 104 du microcontrôleur 100 de la figure 1 selon un mode de réalisation.

Dans l'exemple représenté, la mémoire 104 comprend les programmes 222 et 309 similaires à ceux de la figure 3.

Dans cet exemple, l'espace mémoire 204, comprenant le programme ROT, comprend un emplacement mémoire 405 (ROT configuration) qui comprend la configuration du programme ROT.

Dans un exemple, l'emplacement mémoire primaire 405 contient la configuration courante du programme ROT 204 et est configuré pour n'être accessible que par ce programme ROT de mises à jour. Cet emplacement 405 contient par exemple l'adresse du programme actif à vérifier et exécuter au démarrage, parmi les programmes 222 et 309 par exemple. Le matériel cryptographique associé au programme de mises à jour ROT permet de déchiffrer et authentifier les images de mises à jour, ainsi que les informations de chaque image du système. Ces informations comprennent par exemple :
- les données permettant de vérifier l'intégrité et/ou l'authenticité de l'image, comme par exemple un hash considéré comme le résultat d'une fonction de type hash (hash tag en anglais) ou une signature ;
- les données de dépendance d'images permettant de garantir la cohérence des versions utilisées ;
- les adresses des emplacements primaires et secondaires (ou supplémentaires), où se trouvent respectivement l'image et sa mise à jour ; et
- la méthode d'installation.

De façon facultative, la mémoire 104 comprend un emplacement mémoire secondaire 406 (ROT configuration-secondary slot), configuré pour être accessible en lecture et en écriture par le programme 222 et/ou par le programme de chargement de mises à jour 309. Une nouvelle version de configuration du programme ROT est par exemple chargée dans l'emplacement mémoire 406, avec le programme 222, et/ou avec le programme de chargement de mises à jour 309, et ce avant son installation par le programme ROT au sein de l'espace mémoire 405.

Grâce à l'exemple de la figure 4, dans un exemple, il est possible de définir une stratégie de mise à jour dynamique et séquentielle permettant de mettre à jour consécutivement les images 314 et 316 en réutilisant le seul emplacement 316 pour stocker les images des mises à jour (flèches sur la figure 4). Les images 314 et 316 peuvent être mises à jour avec une méthode d'installation différente, sans utiliser d'emplacements mémoire secondaires dédiés, comme c'est le cas avec l'emplacement mémoire 206, qui peut ainsi être enlevé ou utilisé pour augmenter la taille du programme 222.

L'exemple de la figure 4 permet en outre de définir de façon dynamique la configuration du programme ROT pour modifier, par exemple à différentes étapes des mises à jour des images 314 ou 316, la sélection du programme à exécuter lors d'un redémarrage du microcontrôleur 100, et/ou la sélection d'un emplacement mémoire dans lequel charger une ou des mises à jour, et/ou la méthode d'installation des mises à jour par le programme ROT.

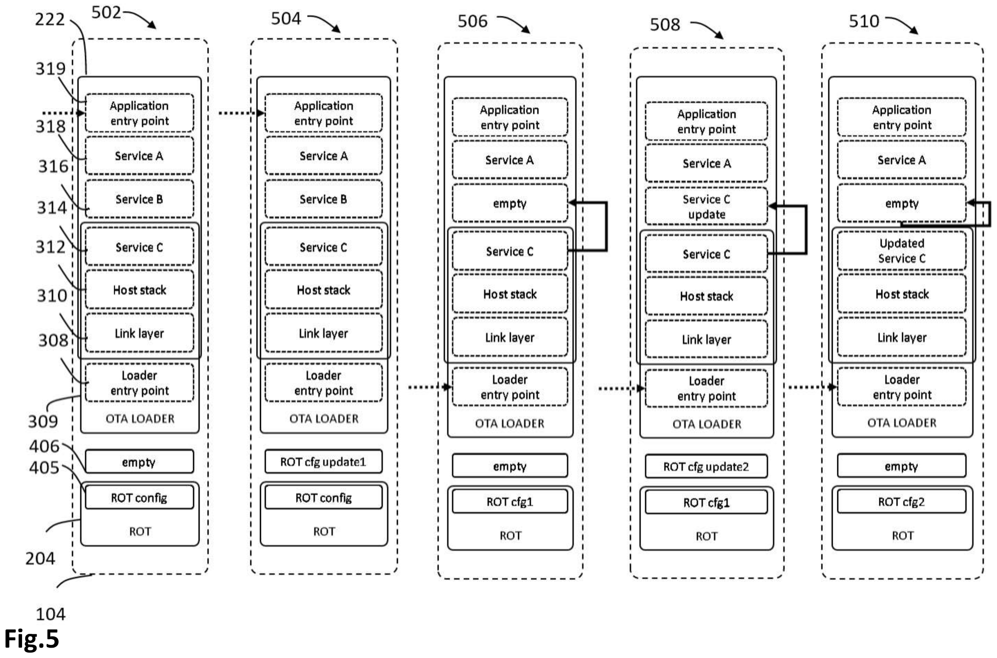

La figure 5 illustre un procédé de mise à jour de programme selon un mode de réalisation.

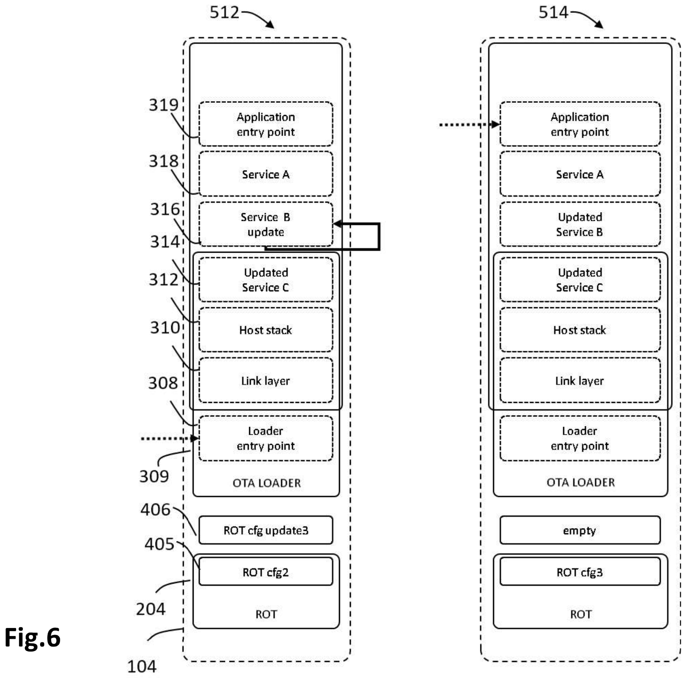

La figure 6 illustre un procédé de mise à jour de programme selon un mode de réalisation.

Les figures 5 et 6 représentent, ensemble, un exemple possible des étapes d'un même procédé permettant de mettre à jour séquentiellement l'image 314 contenue dans programmes 222 et 309, et l'image 316 uniquement contenue dans le programme 222.

Dans une étape 502, la mémoire 104 est similaire à celle de l'exemple de la figure 4 avec l'emplacement mémoire 406 initialement vide. Le programme de mise à jour RoT est configuré pour vérifier l'intégrité, la cohérence et l'authenticité du programme 222 et vérifie l'ensemble des images 310, 312, 314, 316, 318 et 319 composant ce programme 222. Une fois cela vérifié, le programme 222 est démarré en exécutant l'image 319 (représenté avec une flèche en pointillés).

Dans une étape 504, postérieure à l'étape 502, une première version (ROT cfg update1) de données de configuration du programme ROT est chargée dans l'emplacement mémoire 406, par exemple avec le programme 222. La première version des données de configuration du programme ROT comprend par exemple une première version des données de dépendances des images 308, 310, 312, 314, et/ou une première sélection du programme 309 à exécuter lors d'un redémarrage du microcontrôleur 100, et/ou une première sélection d'un emplacement mémoire secondaire dans lequel charger une ou des mises à jour, et/ou une première sélection de la méthode d'installation, des mises à jour chargées, par le programme ROT. Dans cette première version de données de configuration du programme ROT, le programme de chargement de mises à jour 309 (OTA LOADER) est sélectionné, autrement dit configuré, pour être exécuté lors du redémarrage du microcontrôleur. L'emplacement mémoire de l'image 316, qui n'est pas utilisé par le programme de chargement de mises à jour 309, est sélectionné pour y charger une mise à jour de l'image 314 (Service C update).

Dans des étapes 506 et 508, postérieures à l'étape 504, le microcontrôleur 100 est redémarré et le programme de mises à jour ROT vérifie l'authenticité et la version de l'image, optionnellement déchiffre l'image 406 (ROT cfg update1), puis installe (ROT cfg1) la première version de configuration dans l'espace 405. Le programme de mises à jour ROT vérifie l'intégrité, l'authenticité et la version du programme 309 et le démarre. Puis le programme de chargement de mises à jour 309 efface l'image 316. Il télécharge également une image servant à la mise à jour de l'image 314 ainsi qu'une deuxième version (ROT cfg update2) des données de configuration du programme ROT pour les charger, respectivement, dans l'emplacement mémoire de l'image 316 initiale, et dans l'emplacement mémoire 406.

Dans une étape 510, postérieure à l'étape 508, le microcontrôleur est redémarré puis le programme de mises à jour ROT installe (ROT cfg2) la mise à jour de l'image 314 (Updated Service C), depuis l'emplacement de l'image 316 initiale, vers l'emplacement mémoire où est stockée l'image 314 à mettre à jour, et ce par exemple en écrasant, ou à la place de, l'image 314 à mettre à jour. Le programme de mises à jour ROT installe également (ROT cfg2) la deuxième version des données de configuration du programme ROT dans l'espace mémoire primaire 405 en écrasant, ou à la place de, la première version de configuration du programme ROT. L'installation de la nouvelle configuration (ROT cfg2) permet en particulier de définir l'emplacement secondaire de l'image 316 au même endroit que l'emplacement primaire 316, comme défini par la méthode d'installation sur place (install-in-place en anglais). Elle permet également de mettre à jour les informations de versions et de dépendances du programme 309 pour prendre en compte l'installation de la nouvelle image Updated Service C contenue dans le programme 309.

Dans une étape 512, postérieure à l'étape 510, le programme de chargement de mises à jour 309 télécharge une image (Service B update) servant à la mise à jour de l'image 316 ainsi qu'une troisième version (ROT cfg update3) des données de configuration du programme ROT et les charge, respectivement, dans les emplacements mémoires secondaires 316 et 406.

Dans une étape 514, postérieure à l'étape 512, le microcontrôleur est redémarré puis le programme de mises à jour ROT installe la mise à jour de l'image 316 (Updated Service B) dans l'emplacement mémoire primaire de l'image 316 à partir de l'image servant à la mise à jour de l'image 316 téléchargée auparavant, puis installe (ROT cfg3) la troisième version des données de configuration du programme ROT dans l'espace mémoire 405. Dans l'étape 514, la troisième version des données de configuration du programme ROT comprend la sélection du programme 222 ainsi que toutes les informations de dépendance des images utilisées par le programme 222 de sorte que le programme 222 soit vérifié et exécuté lors du prochain redémarrage du microcontrôleur.

Selon un exemple du procédé des figures 5 et 6 :
- dans une première étape, une configuration du programme d'installation ROT de mises à jour est effectuée de sorte que le premier emplacement mémoire 405 comprenne une première version ROT cfg1 de données de configuration du programme d'installation ROT, de sorte que le programme de chargement de mises à jour 309 soit sélectionné pour être exécuté lors du redémarrage du microcontrôleur 100, et de sorte qu'un emplacement mémoire d'une première image 316 du programme applicatif 222 soit sélectionné pour y charger une image Service C update servant à la mise à jour d'une deuxième image 314 du programme applicatif 222 ;
- dans une deuxième étape, le microcontrôleur est redémarré puis le programme de chargement de mises à jour 309 télécharge l'image Service C update servant à la mise à jour de la deuxième image 314 ainsi qu'une deuxième version des données de configuration du programme d'installation ROT, respectivement, dans l'emplacement mémoire de la première image 316 à la place de la première image, et dans le deuxième emplacement mémoire 406,
la deuxième version ROT cfg2 des données de configuration du programme d'installation ROT définissant :
l'emplacement mémoire où a été stocké la première image 316 comme étant l'emplacement où se situe l'image Service C update servant à la mise à jour de la deuxième image 314,
l'emplacement de la deuxième image 314 comme étant celui où installer la mise à jour Updated Service C de la deuxième image 314, et
la méthode d'installation avec copie ;
   - dans une troisième étape, le microcontrôleur est redémarré puis le programme d'installation ROT installe :
l'image de la mise à jour Updated Service C, en utilisant l'image Service C update servant à la mise à jour de la deuxième image 314, à la place de la deuxième image 314, et
la deuxième version ROT cfg2 des données de configuration du programme d'installation ROT dans le premier espace mémoire 405 ;
   - dans une quatrième étape, le programme de chargement de mises à jour 309 télécharge :
une image Service B update servant à la mise à jour de la première image 316, et
une troisième version ROT cfg3 des données de configuration du programme de mise à jour ROT, respectivement, dans l'emplacement mémoire où a été stockée la première image 316, et dans le deuxième emplacement mémoire 406,
la troisième version ROT cfg3 des données de configuration comprend la sélection du programme applicatif 222 ainsi que des informations de dépendance des images contenues dans le programme applicatif 222 ;
- dans une cinquième étape, le microcontrôleur 100 est redémarré puis le programme de mises à jour ROT :
   installe la mise à jour de la première image Updated Service B depuis et dans l'emplacement mémoire de la première image 316 en utilisant l'image Service B update servant à la mise à jour de la première image 316 ;
   installe la troisième version ROT cfg3 des données de configuration du programme d'installation ROT dans le premier espace mémoire 405 ;
   vérifie l'authenticité, l'intégrité et la cohérences des versions des images contenues dans le programme applicatif 222 ; et
   sélectionne le programme 222 à exécuter lors du redémarrage du microcontrôleur 100.

Le procédé de mise à jour des figures 5 et 6 permet la mise à jour de plusieurs images d'un programme sans espace mémoire supplémentaire tout en permettant de respecter la sécurité.

Le microcontrôleur décrit peut être utilisé dans des équipements électroniques personnels, par exemple dans le but de mettre à jour les applications pour appliquer des corrections fonctionnelles ou sécuritaires, dans les appareils à connexion 5G ou plus généralement dans les appareils connectés. L'appareil est par exemple un téléphone dit intelligent (smartphone en anglais) ou fait partie d'un réseau d'internet des objets. Le microcontrôleur est par exemple intégré dans un produit de communication radiofréquence connecté en 5G, NFC, WIFI, UWB (ultra wide band en anglais), à champ proche de type NFC (Near Field Communication en anglais), de type LORA, SIGFOX ou encore Bluetooth^{®}. Le produit intégrant le microcontrôleur inclut potentiellement des filtres ou protections contre les champs magnétiques ou les décharges électriques. Le microcontrôleur décrit peut également être utilisé dans des satellites.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, même si les exemples des figures 5 et 6 montrent la mise à jour de deux images 316 et 314, la personne du métier pourra utiliser les enseignements de la description pour mettre en œuvre la mise à jour d'une seule image ou de plus de deux images d'un même programme avec des stratégies de mise à jour différentes.

Enfin, la mise en œuvre pratique des modes de réalisation et variantes décrits est à la portée de la personne du métier à partir des indications fonctionnelles données ci-dessus. En particulier, pour ce qui est du protocole de téléchargement par le programme 309 qui, même s'il a été décrit dans le texte comme étant configuré pour la mise à jour sans fil, pourra être adapté pour des mises à jour filaires. Dans ce cas-là, la communication avec l'unité 150 se fera en filaire.

## Revendications

1. Procédé de mise à jour d'un ou plusieurs programmes (222, 309) d'un microcontrôleur (100), le procédé comprenant la mise à jour individuelle de différentes images desdits un ou plusieurs programmes (222, 309), la mise à jour de chacune de ces images comprenant :
- la sélection d'un programme à exécuter, parmi plusieurs programmes, lors d'un démarrage du microcontrôleur ;
- la sélection d'un ou plusieurs emplacements mémoires desdits un ou plusieurs programmes (222, 309), dans lequel charger une image servant à la mise à jour ; et
- la mise à jour de données de versions, et de dépendance d'images, desdits un ou plusieurs programmes (222, 309), contenues dans un programme de mises à jour (ROT) .

2. Microcontrôleur (100), comprenant un ou plusieurs programmes (222, 309), et un programme de mises à jour (ROT), le microcontrôleur étant configuré pour mettre en œuvre la mise à jour individuelle de différentes images desdits un ou plusieurs programmes (222, 309), la mise à jour de chacune de ces images comprenant :
- la sélection d'un programme à exécuter, parmi plusieurs programmes, lors d'un démarrage du microcontrôleur ;
- la sélection d'un ou plusieurs emplacements mémoires desdits un ou plusieurs programmes (222, 309), dans lequel charger une image servant à la mise à jour ; et
- la mise à jour de données de versions, et de dépendance d'images, desdits un ou plusieurs programmes (222, 309), contenues dans un programme de mises à jour (ROT) .

3. Procédé selon la revendication 1, ou microcontrôleur selon la revendication 2, dans lequel la sélection du programme à exécuter lors d'un démarrage du microcontrôleur est réalisée parmi un desdits un ou plusieurs programmes (222, 309), l'un desdits un ou plusieurs programmes (222, 309) étant un programme de chargement de mises à jour (309) et un autre desdits un ou plusieurs programmes (222, 309) étant un programme applicatif (222).

4. Procédé selon la revendication 1 ou 3, ou microcontrôleur selon la revendication 2 ou 3, dans lequel la mise à jour de chacune des images comprend en outre la sélection d'une méthode d'installation des mises à jour à utiliser par le programme de mises à jour (ROT).

5. Procédé selon l'une quelconque des revendications 1 ou 3 ou 4, ou microcontrôleur selon l'une quelconque des revendications 2 à 4, dans lequel lesdits un ou plusieurs emplacements mémoires sélectionnés comprend un emplacement mémoire d'une ou plusieurs images desdits un ou plusieurs programmes (222, 309).

6. Procédé ou microcontrôleur selon la revendication 4, ou 5 dans sa dépendance à la revendication 4, dans lequel la mise à jour de chacune des images comprend en outre la mise à jour de données de configuration (ROT cfg1, ROT cfg2, ROT cfg3) du programme de mises à jour (ROT) comprenant des données associées :
- au programme à exécuter ;
- auxdits un ou plusieurs emplacements mémoires dans lesquels charger, avant leur installation, une ou des mises à jour d'image ;
- aux données de versions et de dépendance d'images ; et
- à la méthode d'installation de mises à jour sélectionnée.

7. Procédé selon l'une quelconque des revendications 1 ou 3 à 6, ou microcontrôleur selon l'une quelconque des revendications 2 à 6, dans lequel la sélection du programme à exécuter lors d'un redémarrage du microcontrôleur (100) comprend la sélection d'un point d'entrée respectif (319, 308) d'un parmi lesdits un ou plusieurs programmes (222, 309).

8. Procédé ou microcontrôleur selon l'une quelconque des revendications 3, ou 4 à 7 dans leur dépendance à la revendication 3, dans lequel le programme applicatif (222) et le programme de chargement de mises à jour (309) ont des images en commun.

9. Procédé ou microcontrôleur selon l'une quelconque des revendications 3, ou 4 à 8 dans leur dépendance à la revendication 3, dans lequel le programme applicatif (222), le programme de chargement de mises à jour (309) et le programme de mises à jour (ROT) sont stockés dans une mémoire non volatile (104) du microcontrôleur.

10. Procédé ou microcontrôleur selon la revendication 9 dans sa dépendance à la revendication 6, dans lequel un premier emplacement mémoire (405) de ladite mémoire (104) est configuré pour être accessible uniquement par le programme de mises à jour (ROT), et pour contenir lesdites données de configuration (ROT cfg1, ROT cfg2, ROT cfg3) du programme d'installation (ROT).

11. Procédé ou microcontrôleur selon la revendication 10, dans lequel un deuxième emplacement mémoire (406) de ladite mémoire (104) est configuré pour être accessible en lecture et en écriture par le programme applicatif (222) et par le programme de chargement de mises à jour (309).

12. Procédé ou microcontrôleur selon la revendication 11, dans lequel les mises à jour (ROT cfg upload1, ROT cfg upload2, ROT cfg upload3) des données de configuration du programme de mises à jour (ROT) sont chargées, dans ledit deuxième emplacement mémoire (406), puis sont installées dans le premier emplacement mémoire (405) par le programme de mises à jour (ROT).

13. Procédé ou microcontrôleur selon l'une quelconque des revendications 6, ou 7 à 12 dans leur dépendance à la revendication 6, dans lequel un programme parmi le programme de chargement de mises à jour (309) ou le programme applicatif est configuré pour :
- télécharger des données de configuration du programme de mises à jour (ROT) ;
- effacer des images desdits un ou plusieurs programmes (222, 309) ;
- télécharger des mises à jour dans lesdits un ou plusieurs emplacements mémoires définis dans les données de configuration du programme de mises à jour (ROT).

14. Procédé ou microcontrôleur selon la revendication 1, dans lequel la mise à jour de chacune de ces images comprend :
- une première mise à jour d'une configuration d'un programme de mise à jour (ROT), la première mise à jour comprenant :
mettre à jour des données de version et de dépendance d'image dudit un ou plusieurs programmes (222, 309) ;
sélectionner, parmi un desdits un ou plusieurs programmes (222, 309), un programme de chargement de mise à jour (309) à être exécuté au prochain démarrage du microcontrôleur ; et
sélectionner un ou plusieurs emplacements mémoires dudit un ou plusieurs programmes (222, 309) qui ne soient pas utilisés pour ledit programme de chargement de mise à jour (309) ; puis
- après un redémarrage du microcontrôleur :
la vérification dudit programme de chargement de mise à jour (309) par le programme de mise à jour (ROT) en utilisant les données de dépendance et de version d'image de la première mise à jour de la configuration du programme de mise à jour (ROT) ;
l'exécution dudit programme de chargement de mise à jour (309) comprenant le chargement de données associées à la mise à jour de l'image individuelle dans lesdits un ou plusieurs premiers emplacements mémoires ; et
le chargement d'une seconde mise à jour de la configuration du programme de mise à jour (ROT) comprenant la sélection du programme de chargement de mise à jour (309) à exécuter au prochain démarrage, et une sélection d'un ou plusieurs deuxièmes emplacements mémoires du programme de chargement de mise à jour (309) correspondant à l'image individuelle à mettre à jour ; puis
- après un redémarrage du microcontrôleur :
la vérification dudit programme de chargement de mise à jour (309) par le programme de mise à jour (ROT) en utilisant les données de dépendance et de version d'image de la deuxième mise à jour de la configuration du programme de mise à jour (ROT) ; et
l'exécution dudit programme de chargement de mise à jour (309), comprenant le chargement, desdites données associées à la mise à jour de l'image individuelle, dans lesdites deuxièmes emplacements mémoires sélectionnés, les données chargées dans lesdits deuxièmes emplacements mémoires correspondant à l'image individuelle mise à jour.

15. Système radiofréquence (80) comprenant une unité de mise à jour (150), externe au microcontrôleur (100), et le microcontrôleur (100) selon l'une quelconque des revendications 2 à 14,
le programme de chargement de mises à jour (309) du microcontrôleur (100) étant configuré pour télécharger des mises à jour d'images depuis l'unité de mise à jour (150).
